# EUROPEAN PATENT APPLICATION

(11) **EP 4 344 861 A1**
(43) Date of publication of application: **03.04.2024**
(21) Application number: 22199222.5
(22) Date of filing: 30.09.2022
(51) Int. Cl.: B29D 11/00, G01N 21/3586, H01P 11/00, H01Q 15/00

(54) **ULTRA-THIN OPTICAL ELEMENTS AND PRODUCTION METHOD THEREOF**

(71) Applicant: EMPA Eidgenössische Materialprüfungs- und Forschungsanstalt, 8600 Dübendorf (CH)
(72) Inventor: Mavrona, Elena, 8600 Dübendorf (CH); Graf, Jil, 8600 Dübendorf (CH); Shorubalko, Ivan, 8600 Dübendorf (CH); Hack, Erwin, 8600 Dübendorf (CH)
(74) Representative: Prins Intellectual Property AG

(57) **Abstract**

A production method of an optical setup, comprising at least one mechanically robust freestanding ultrathin optical element with a supporting frame, using at least one thin film technique step, which is cost-effective and highly reproducible. This is reached by A) coating of a separation layer and a subsequent substrate on a carrier, B) coating of a photoresist layer on the substrate/separation layer/carrier system, before C) the photoresist layer is structured and coated with a metal layer to obtain the designed metamaterial, before D) a protective layer is spin-coated onto the metal layer/ substrate/ separation/ carrier-system, forming at least one ultrathin optical element and directly afterwards, E) a supporting frame is applied using 3D printing of a thermoplastic onto the carrier, and protective layer to later individuate the optical elements, F) fixed ultrathin optical elements are removed from the carrier by dissolving the separation layer.

## Description

### TECHNICAL FIELD

The present invention describes a production method of an optical setup, comprising at least one mechanically robust freestanding ultra-thin optical element, using at least one thin film technique step and at least one mechanically robust freestanding ultra-thin optical element with an at least partly surrounding supporting frame, wherein the ultra-thin optical element is suitable for beam manipulation of visible light, infrared light and THz radiation.

### STATE OF THE ART

Optical elements such as lenses are made of bulk, transparent materials. In contrast, so-called metalenses are flat surfaces etched with nanostructures that focus light like a standard lens. Similarly, flat surfaces with metallic micro- and nanostructures designed for the purpose (metasurfaces) are used to shape a light beam, e.g., into different beamlets, into a profile with flat intensity distribution, into a square beam shape, and many others. Such structures, prepared with at least one thin film technique step are defined as ultra-thin optical elements and are the aim of this invention.

Simple structures such as gratings or arrays of cross-hair elements serve as polarizers, low-pass, or bandpass wavelength filters. Metasurfaces thus are able to modulate the incoming beam (electric field) in polarization, intensity distribution (amplitude), in phase and also in propagation direction. The application range includes visible wavelengths (400 - 800 nm), and near to far-infrared wavelengths (> 0.8 µm).

We focus on the state of the art in the THz regime, as the project at hand is on THz bandpass filters. Ultra-thin optical elements based on metallic micro- and nanostructures with or without substrate - such as filters, polarizers, metalenses - are commonly available. Many commercial products are fabricated from metallic foils, meshes, or wire grids. They are unprotected and are prone to damage upon handling. They are delivered in sealed containers, but, typically, the warranty is voided when the container is opened (see e.g. Tydex, http://www.tydexoptics.com ).

In Opt Exp 25 (2017) 25125 an Aluminum foil with a thickness of 10 µm was laser machined, forming an ultra-thin optical element. Such unprotected freestanding metal foils are not damage tolerant and extremely difficult to handle in a laboratory and industrial environment.

There are thin-film polarizers forming ultra-thin optical elements available based on an array of metal stripes on polymer membranes. (e.g. Microtech). However, they are also not protected. The array of metal stripes is fabricated using an ultrafast laser micromachining technique. However, laser machining is limited in lateral resolution, has an insufficient structure quality, and is based on thick metal films. Other vendors deliver a pair of protective windows to sandwich the optical element, and mount it inside a metallic housing. This is making the element heavy and clumsy, (see e.g. Microtech, http://www.mtinstruments.com/thzpolarizers/index.htm).

Production designs for ultra-thin optical elements do exist that feature protective layers on both sides of the optical element, or stabilizing frames around it, but they are complex and expensive.

The state-of-the-art of materials for and fabrication of THz metasurfaces on polymers has recently been reviewed in Adv. Optical Mater. 8 (2020) 1900750. The state-of-the-art fabrication process (their Fig.2) consists of
(1) spin-coating PMMA on a supporting substrate (Si wafer) and dehydrating at 120 °C, subsequent
(2) direct spin-coating COC (Cyclic olefin copolymer) on the PMMA/Si wafer, before
(3) patterning and deposition of Au structures. For protecting the structure the article uses wafer bonding of a freestanding COC film obtained
(4) by the same process steps 1-2,
(5) released by dissolving the PMMA sacrificial layer and
(6) attached to a PDMS-coated Si wafer.
(7) the COC/PDMS/Si wafer is placed on the first layer Au resonators. Bonding is performed at 100 °C, a force of 400 N, and a dwelling time of 15 min using a wafer bonder. Then,
(8) the bonded COC is released by peeling off the PDMS-coated wafer. The production process is now finished or can be repeated
(9) by again patterning Au structures.

However, preparing a second COC film on a Si-wafer, releasing and transferring, and finally, wafer bonding is a complicated process. It was not possible for the authors to directly spin-coat a second COC layer onto the Au structure, as the cured COC was dissolved, causing the Au structures to displace. The resulting ultra-thin optical elements were not directly equipped with a supporting frame in the same production process.

The so far known production methods of individual ultra-thin optical elements have so far been very complicated and costly, and yet a more easily prepared setup of fixed ultra-thin optical elements with a supporting frame does not exist.

### DESCRIPTION OF THE INVENTION

The object of the present invention is a simplified, more cost-effective and reproducible production method of ultra-thin optical elements and setups of fixed ultra-thin optical elements, to be used for beam manipulation of visible light, infrared light and THz radiation.

The invention makes use of at least one thin film process, where the metallic functional layer is shaped into a metamaterial by lithography, and protected by sandwiching it between two polymeric layers that are transparent to radiation from UV to THz.

Additionally, a mounting frame, 3D-printed at least partly around the optical element further enhances its mechanical stability, which is produced directly after production of the multiplicity of ultra-thin optical elements. The resulting integrated compound element is thin and compact, yet robust and easy to handle.

The key elements of the invention are
(i) use of lithography for high-resolution structuring of the functional layer and creation of a metamaterial,
(ii) use of different solvents for the application of the protective polymer layers, such that the first layer is not damaged during deposition of the second one, and
(iii) direct 3D-printing of the mounting frame on the protective polymer layer using the same material class, such that the frame cannot be easily removed, e.g. by solvents and for temperature stability.

Due to their wide range of wavelength from visible (400 - 800 nm) and infrared (> 0.8 µm) to THz (∼1 mm), ultra-thin optical elements and setups with such ultra-thin optical elements according to the invention can be used in a vast variety of applications, either upstream a camera or photo-array to control the incoming radiation, or as filter or for beam manipulation downstream from a radiation source.

Terahertz imaging and spectroscopy are emerging and significant nondestructive evaluation (NDE) techniques used for dielectric (nonconducting) materials analysis and quality control in the pharmaceutical, biomedical, security, materials characterization, and aerospace industries.

Applications in the visible and infrared range are mainly focused on laboratory use, like microscopy, but could be extended to wider markets like lighting of cars or other mobile illumination with restrictions on device space and weight.

### DESCRIPTION

We present here production of ultra-thin optical elements with a supporting frame, building a setup with at least one ultra-thin, mechanically robust optical elements for beam manipulation like, among others, lenses, filters and polarizers, with freestanding geometry, mountable directly to standard optics holders and suitable for visible light (wavelength 400-800 nm), infrared (> 0.8 µm) and Terahertz radiation (∼1 mm).

The production method we have developed aims at fabricating freestanding ultra-thin optical elements for beam manipulation that can directly be mounted to standard optics holders.

It encompasses the entire process from the design and substrate preparation to the final product, a setup with at least one ultra-thin optical element, and the supporting frame.

The essential advantage of the process is that the steps from the substrate preparation to the final, mountable element are done on a single carrier without the need of transfer or wafer bonding.

Any design of the metallic structure(s) can be produced, limited only by the processing capability of steps B) and C) below. We have demonstrated the process for band-pass filters centred in the range from 0.3 THz to 3 THz. The process, however, is not limited to the THz range. All materials and processes involved are compatible for the frequency range from UV (<300 nm) to THz (mm-waves).

The process is described as follows.
A) A rigid carrier is coated with a thin separation layer and a polymer substrate using spin-coating.
   The thickness of the polymer substrate is adjusted by choosing the appropriate processing parameters.
   We have demonstrated the process using
      a) a silicon wafer (4" Si-Wafer) as a carrier;
      b) Poly(methyl methacrylate) (PMMA) as a separation layer, or (Poly(4-vinylphenol), also called polyvinylphenol or PVP, or Poly(vinyl alcohol) (PVA) can be used, most preferred applied by spin-coating, with thicknesses from 1 µm up to 25 µm;
      c) a substrate of Cyclic olefin copolymer (COC, transparent amorphous polymer) with a first solvent 1,2 Dimethylcyclohexan, resulting in thicknesses between 2 µm and 25 µm of COC,
         most preferred by spin-coating,
         wherein the process allows for fabrication of still thinner films, down to 1 µm and subsequent curing.
B) A photoresist layer is applied to the substrate/separation/carrier system and exposed according to the design of the metasurface for later metallization. We have demonstrated the process by spin-coating a photoresist layer and laser beam writing. The photoresist layer is compatible with photolithography or e-beam writing for patterning. As an example, photoresist AZ 5214E was used resulting in a thickness between 1µm to 2µm.
C) The photoresist layer/substrate/separation/carrier-system is subsequently metallized and later lift-off of the mask is performed. We have demonstrated the coating process by thermal deposition of chrome (5nm thickness) and of gold (200nm thickness) and later lift-off in cold acetone.
   However, the process is not limited to gold, because COC is compatible with any metal.
D) After the fabrication of the at least one optical element - comprising so far the carrier, separation layer, polymer substrate, photoresist layer, structured metal layer - an additional protective layer is applied if needed.
   We have demonstrated the protective layer coating process by spin-coating another layer of COC with a second solvent, here Buthylbenzene, onto the structured metal layer, with thickness of the resulting protective layer greater than 1 µm. This protective layer is based on a different second solvent than the first solvent used in step A, so the polymer substrate as first COC layer is not dissolved, and the Au structures of the metal layer are not displaced.
E) Finally, as a reinforcing structure, a supporting frame or mounting frame of appropriate dimensions is directly applied on the top while still on the carrier to later individuate the optical elements. We have demonstrated the process using 3D printing of the supporting frame of a thermoplastic like COC directly onto the protective layer.

The 3D printed supporting frames are strongly bonded to the films and cannot be removed with solvents, such as acetone. In addition, using COC for 3D printing eliminates effects such as corrugation due to different coefficients of thermal expansion, which makes the resulting component more robust.

The 3D printed supporting frames are not printed onto the polymer substrate, but directly onto the protective layer while on the carrier. Depending on the 3D printing, a multiplicity of optical elements can be grouped into setups comprising a multiplicity of optical elements. The frame dimension is adapted to the later mounting option, such as a standard lens or filter mount, but can also be designed to an individual geometry adapted to a special use.

F) Each whole optical element, comprising polymer substrate with the structured metal layer and protective layer is subsequently removed from the carrier by dissolving the separation layer, in our case the PMMA layer using acetone. This dissolving procedure must be carried out after the 3D printing and secures that the optical elements e.g. in the form of filters remain flat, protected and directly mountable.

G) The individual optical elements supported by the supporting frame are obtained after removal from the carrier by cutting. The cutting can be done by known macroscopic tools. The optical elements are ready to be used as freestanding optical elements and/or as optical elements mountable in dedicated or standard optomechanical holders such as lens holders, filter holders, mounting barrels, or others.

Cyclic olefin copolymer mentioned above includes compounds comprising an amount of cyclic olefin copolymer, and comprising other transparent polymers.

### LIST OF PARTS

setup of fixed ultra-thin optical elements
ultra-thin optical element (standalone, a passive photonic device) carrier
separation layer (PMMA)
polymer substrate (with first solvent, Cyclic olefin copolymer, COC, tradename Topas, > 1 µm)
photoresist layer (AZ 5214E, (2000 RPM/20 s 4000RPM/ 20 s) most preferred spin-coating)
metal layer (metallic functional layer, 5 nm chrome, 200 nm gold) protective layer (COC with the second solvent)
supporting frame/mounting frame (for ultra-thin optical elements, integrated as part of the setup, 3D printed)

## Claims

1. Production method of an optical setup, comprising at least one mechanically robust freestanding ultra-thin optical element, using at least one thin film technique step,
**characterized in the steps:**
A) coating of a separation layer and a subsequent substrate of Cyclic olefin copolymer with a first solvent and subsequent curing on a carrier such as a silicon wafer,
B) coating of a photoresist layer on the substrate/separation layer/carrier system, before
C) the photoresist layer/substrate/separation/carrier system is subsequently structured and coated with a metal layer to obtain the designed metamaterial, before
D) a protective layer of Cyclic olefin copolymer with a second solvent, differing from the first solvent, is spin-coated with a resulting thickness greater than 1 µm onto metal layer/photoresist layer/substrate/separation/carrier system, forming at least one ultra-thin optical element, and directly afterwards
E) a supporting frame is applied using 3D printing of a thermoplastic onto the carrier and protective layer to later individuate the optical elements, before
F) fixed ultra-thin optical elements are removed from the carrier by dissolving the separation layer using a solvent, forming a setup of fixed ultra-thin optical elements.

2. Production method according to claim 1, wherein in step C) thermal deposition of gold is carried out with thickness of at least 100 nm.

3. Production method according to claim 1, wherein in a step G) ultra-thin optical elements are cut from the setup of fixed ultra-thin optical elements after step F), which are mountable in standard optomechanical holders.

4. Production method according to one of the preceding claims, wherein in step A) the separation layer is made of PMMA, PVP or PVA and the substrate has a thickness between 1 µm and 25 µm.

5. Production method according to one of the preceding claims, wherein the first solvent in step A) is acetone or water.

6. Production method according to one of the preceding claims, wherein in step B) the photoresist layer is coated by spin-coating or photolithography and laser beam or e-beam writing.

7. Production method according to one of the preceding claims, wherein in step C) the resulting metal layer comprises chrome with a thickness of at least 5nm and gold with a thickness of at least 100nm.

8. Production method according to one of the preceding claims, wherein the second solvent in step D) is buthylbenzene

9. Production method according to one of the preceding claims, wherein the material of the 3D printed supporting frame in step E) is a Cyclic olefin copolymer.

10. Production method according to one of the preceding claims, wherein if in step A) as separation layer comprising Poly(methyl methacrylate) (PMMA), polyvinylphenol (PVP) or Poly(vinyl alcohol) (PVA) are used, the solvent in step F) is acetone in case of PMMA and water in case of PVA.

11. At least one mechanically robust freestanding ultra-thin optical element with an at least partly surrounding supporting frame, wherein the ultra-thin optical element is suitable for beam manipulation of visible light, infrared light, and THz radiation, **characterized in that**
the ultra-thin optical element comprises, in this order, a polymer substrate, a structured metal layer, and a subsequent protective layer, at least partly surrounded by the supporting frame, wherein the polymer substrate, protective layer, and supporting frame are made of a cyclic olefin copolymer.

12. Ultra-thin optical element according to claim 11, wherein the supporting frame is made by 3D printing.

13. Ultra-thin optical element according to claim 12, wherein the supporting frame is made of a cyclic olefin copolymer.

14. Ultra-thin optical element according to one of the claims 11 to 13, wherein the protective layer of a cyclic olefin copolymer is produced by a spin-coating step, resulting in thickness between 1 µm and 5 µm.

15. Ultra-thin optical element according to one of the claims 11 to 13, wherein the metal layer is made of chrome and gold.

16. Ultra-thin optical element, according to one of the claims 11 to 15, wherein the substrate has a thickness between 1 µm and 25 µm.
